# EUROPEAN PATENT SPECIFICATION

(11) **EP 1 613 172 B1**
(45) Date of publication and mention of the grant of the patent: **13.06.2007**
(21) Application number: 04727563.1
(22) Date of filing: 15.04.2004
(51) Int. Cl.: A23J 3/08, A23J 1/20, A23C 9/142, A23C 9/13, A23C 9/154, A23L 1/305

(54) **METHOD FOR PRODUCING A WHEY PROTEIN CONCENTRATE ENRICHED IN BETA-LACTOGLOBULIN AND TEXTURE ENHANCER BASED THEREUPON FOR USE IN DAIRY PRODUCTS**
VERFAHREN ZUR HERSTELLUNG EINES BETA-LAKTOGLOBULIN-ANGEREICHERTES MOLKENPROTEINKONZENTRATES UND DARAUF BASIERENDER TEXTURVERSTÄRKER ZUR VERWENDUNG IN MILCHPRODUKTEN
PROCEDE DE PREPARATION D'UN CONCENTRE DE PROTEINES DE LACTOSERUM ENRICHI EN BETA-LACTOGLOBULINE ET RENFORCATEUR DE TEXTURE BASE SUR CELUI-CI, A L'UTILISATION DANS DES PRODUITS LAITIERS

(30) Priority: 15.04.2003 EP 03076099
(43) Date of publication of application: 11.01.2006
(73) Proprietor: Campina B.V., 5301 LB Zaltbommel (NL)
(72) Inventor: MAAS, Johannes, Antonius, Maria, NL- 5412 NK Gemert (NL); TINDEMANS, Gertruda, Wilhelmina, Elisabeth, NL-5673 LJ Nuenen (NL); VAN DE VEERDONK, Franciscus, Lambertus, Maria, NL-5248 JS Rosmalen (NL)
(74) Representative: van Westenbrugge, Andries
(86) International application number: PCT/EP2004/004116
(87) International publication number: WO 2004/091306

(56) References cited:
- EP-A- 0 642 740
- EP-A- 0 709 034
- WO-A-01/52665
- WO-A-93/00832
- WO-A-97/35485
- DE-A- 19 950 240
- US-A- 4 485 040
- US-A- 4 992 178
- US-A- 5 420 249
- US-A- 5 455 331
- US-A- 5 476 590
- US-A- 5 565 153
- GESAN-GUIZIOU G ET AL: "PROCESS STEPS FOR THE PREPARATION OF PURIFIED FRACTIONS OF ALPHA-LACTALBUMIN AND BETA-LACTOGLOBULIN FROM WHEY PROTEIN CONCENTRATES" JOURNAL DAIRY RESEARCH, CAMBRIDGE, GB, vol. 66, no. 2, 1999, pages 225-236, XP008016244
- PEARCE R J: "APPLICATIONS FOR CHEESE WHEY PROTEIN FRACTIONS" CSIRO FOOD RESEARCH QUARTERLY, MELBOURNE, AU, vol. 51, no. 1/2, 1991, pages 74-85, XP000865580 ISSN: 0310-9070
- "EFFECT OF INCREASED SS-LACTOGLOBULIN AND WHEY PROTEIN CONCENTRATIONON THE STORAGE STABILITY OF UHT PROCESSED MILK" AUSTRALIAN JOURNAL OF DAIRY TECHNOLOGY, DAIRY INDUSTRY ASSN AUSTRALIA, HIGHETT VIC, AU, vol. 54, no. 2, October 1999 (1999-10), pages 77-83, XP000859933 ISSN: 0004-9433
- LEE S-P ET AL: "REDUCING WHEY SYNERESIS IN YOGURT BY THE ADDITION OF A THERMOLABILEVARIANT OF -LACTOGLOBULIN" BIOSCIENCE BIOTECHNOLOGY BIOCHEMISTRY, JAPAN SOC. FOR BIOSCIENCE, BIOTECHNOLOGY AND AGROCHEM. TOKYO, JP, vol. 58, no. 2, 1 February 1994 (1994-02-01), pages 309-313, XP000435775 ISSN: 0916-8451

## Description

The present invention relates to a method for enriching whey protein concentrate in β-lactoglobulin, to a texture enhancer based thereupon, which is particularly suitable for use in dairy products, and to dairy products comprising such enhancer.

Whey protein concentrate is a common additive in dairy products such as yoghurt. Whey protein concentrate is available in a number of different types based upon the protein content of the product, which can range between 25%-89%. It will further contain some lactose, fat, and minerals. A special form of whey protein concentrate is whey protein isolate, containing 90% protein or more. As the protein level increases the amount of lactose decreases. Whey proteins are not a single protein but consist of a number of individual protein components. The individual components in whey protein comprise β-lactoglobulin, α-lactalbumin, lactoferrin, immunoglobulins, lactoperoxidase, bovine serum albumin (BSA), lysozyme and others, such as glycomacropeptide, which is only present in cheese whey. US-A-5455331 discloses a method for fractionation of whey, especially into enriched α-lactalbumin and β-lactoglobulin fractions, comprising reduction of the ionic strength and specific gravity, adjustment of pH to 3.8-5.5, heating to 55-70°C, cooling, separation of the aggregated protein containing α-lactalbumin, recovering β-lactoglobulin.

Gesan-Guiziou et al., Journal of Dairy Research 1999, 66, 225-236 pertains to a similar process; concentrated acid whey, precipitation of α-lactalbumin by heating to 55°C for 30 or 150 min at pH 3.9, microfiltration with a 0.2 micron Membralox membrane, to separate the soluble β-lactoglobulin from the precipitate.

It is a first object of the invention to provide an alternative method for preparing a whey protein concentrate.

Fermented milk products like yoghurt are obtained by incubating milk or a milk-derived product with particular microorganisms, such as lactic acid bacteria. Usually, the raw material is cow's milk, but the milk of other animals, such as goats, can also be used. Milk-derived products comprise cream or whey. The milk may be whole milk, but also low-fat or non-fat milk, or recombined milk, made from milk powder dissolved in water.

Traditionally, yoghurt is produced by inoculation of milk with *Lactobacillus delbrueckii* subsp. *bulgaricus* and *Streptococcus thermophilus* as starter cultures. Two basic types of yoghurt exist, namely set yoghurt and stirred yoghurt.

Set yoghurt is fermented after being packed, and stirred yoghurt is almost fully fermented in a fermentation tank, after which it is stirred to break up and homogenize the yoghurt gel and packed. Set yoghurt but also stirred yoghurt may undergo syneresis during storage. To obtain the necessary stability, viscosity and texture, stabilizers or texturizers may be added. These comprise for example milk powder, milk protein (caseinates and whey proteins), but also non-dairy ingredients like chemically modified starch, carrageenan, guar gum, pectin, gelatin, etc. Non-dairy food additives may adversely affect the taste and aroma of yoghurt. A further disadvantage of non-dairy stabilizers is that these are not always allowed in yoghurt according to food law regulations which vary per country.

It is therefore a further object of the present invention to provide an alternative texture enhancing agent.

In the research that led to the present invention a new method for preparing whey protein concentrate (WPC) was developed. Upon using the WPC thus prepared in the manufacture of yoghurt it was surprisingly found that this led to an unexpected increase in viscosity and texture in the end product. It was then established that the WPC was enriched in β-lactoglobulin.

The invention thus provides a method for preparing a whey protein concentrate enriched in β-lactoglobulin, comprising:
a) providing an acid whey;
b) heating the whey at an acidic pH to a particular temperature;
c) ultrafiltering the heated whey over a membrane with a cut-off ≤ 10 kDalton to obtain a concentrated retentate;
d) microfiltering the retentate over a microfiltration membrane to obtain a permeate;
e) optionally ultrafiltering and/or diafiltering the permeate over a membrane with a cut-off of ≤ 10 kDalton;
f) retaining the retentate to obtain a β-lactoglobulin enriched whey protein concentrate or isolate.

Step c) and d) are preferably performed at substantially the same temperature as the temperature of the heat treatment. Step e) is intended to concentrate the permeate.

The acid whey can be an acid whey obtained from casein production or acidified cheese whey.

The acidic pH is a pH between 3.5 and 5.5, suitably between about 4.0 and 5.0, more suitably between about 4.4 and 4.7, most suitably about 4.6.

The microfiltration membrane has a pore size of between 0.1 and 1.4 micron, preferably between 0.2 and 0.8 micron, more preferably about 0.3 micron. The microfiltration membranes can be selected from the group of polysulfon membranes, polyethersulfon membranes, aluminiumoxide (AlOX) membranes, zirconiumoxide (ZrOX) membranes, polyvinylidene (PVDF) membranes, regenerated cellulose membranes. The microfiltration membrane is suitably a 0.3 micron polyvinylidene membrane, such as an Osmonics^{™} JX840F membrane. The membranes are preferably not substituted with amide functions.

The heat treatment is performed during 15 minutes to 6 hours, preferably from 30 minutes to 3 hours, more preferably from 30 minutes to 1 hour and most preferably during about 45 minutes at a temperature between 45 and 65°C, preferably between 50 and 60°C, more preferably at about 55°C.

Upon characterisation of the β-lactoglobulin enriched whey protein isolate obtained by the method of the invention as specified in the example it was found that the weight ratio of α-lactalbumin to β-lactoglobulin is 1:18.4.

Based upon this finding and the fact that this enriched WPC increased the viscosity and texture of yoghurt, it was established that improved texture, viscosity and structure of dairy products can be obtained by addition of a texture enhancer which comprises an amount of β-lactoglobulin that leads to a weight ratio of α-lactalbumin to β-lactoglobulin in the product comprising the enhancer of more than 1:3, 1:3.1, 1:3.2, 1:3.3, 1:3.4, 1:3.5, 1:3.6, 1: 3.7, 1:3.8, 1:3.9 more than 1:4, 1:4.1, 1:4.2, 1:4.3, 1:4.4, 1:4.5, 1:4.6, 1:4.7, 1:4.8, 1:4.9, preferably more than 1:5, 1:5.25, 1:5.5, 1:5.75, more preferably more than 1:6, 1:6.5, 1:7, 1:7.5, 1:8, 1:8.5 or 1:9, 1:9.5, even more preferably more than 1:10, more than 1:15, more than 1:20, and most preferably more than 1:25. The enhancer may have a weight ratio of α-lactalbumin to β-lactoglobulin up to 1:100.

The invention further relates to enhancers which comprises an amount of β-lactoglobulin that leads to a weight ratio of β-lactoglobulin to α-lactalbumin in the product comprising the enhancer that is at least 0.3, more specifically at least 0.4, 0.5, 0.6, 0.8, 1.0, 2, 4, 6, 8, 10, 15 or 20 higher than the ratio found in the product without the enhancer.

It was found that when the weight ratio of β-lactoglobulin to α-lactalbumin in the end product is above the weight ratio obtained by using the usual starting milk or milk derived product (optionally with further protein additives) the viscosity and/or firmness of the end product is surprisingly increased leading to a thick and creamy yoghurt or dessert. Milk and whey have a more or less constant weight ratio of α-lactalbumin to β-lactoglobulin of about 1:2.5 (see "Dairy Chemistry and Physics" by P. Walstra & R. Jenness (1984) John Wiley & Sons, New York). Dairy products or food ingredients derived therefrom have also an α-lactalbumin to β-lactoglobulin weight ratio of 1:2.5. The enhancer of the invention is added to the milk or milk derived material in an amount sufficient to achieve a weight ratio of β-lactoglobulin/α-lactalbumin in the end product that is higher than in the starting product.

In a suitable embodiment the enhancer is based on a whey protein concentrate (WPC).

The whey protein concentrate for use in the invention can either be a whey protein concentrate enriched in β-lactoglobulin obtainable by the method of the invention or in any other way, or a whey protein concentrate with extra β-lactoglobulin added thereto. A whey protein concentrate enriched in β-lactoglobulin can be prepared as described in the Example. Alternatively, the texture enhancer is β-lactoglobulin per se.

Preferably the β-lactoglobulin in the enhancer is native β-lactoglobulin. In that case, upon denaturation, it can precipitate onto the casein present in the milk to form a network of micelles that inhibits settling of the casein. Several genetic variants of β-lactoglobulin have been detected of which the bovine phenotype A and phenotype B are the most dominant. The bovine A variant differs from the B variant by two amino acids only: aspartate-64 and valine-118. These amino acids are substituted by glycine and alanine in the B variant. All the variants contain five cysteine residues, four of which are involved in forming intra-chain disulfide bridges. According to the invention, β-lactoglobulin can be used as occurring as a mixture of various types in normal milk used for industrial dairy processing; said normal milk is usually mixed milk originating of one or more herds of cows. No further fractionation or purification steps of the individual β-lactoglobulin types are needed.

The enhancer of the invention may further comprise additional components to further improve the structure, texture and viscosity of the dairy product, such as yoghurt. Such components are for example casein and/or caseinate, starch, pectin, gelatin, modified starch.

The invention further relates to dairy products having a weight ratio of β-lactoglobulin to α-lactalbumin that is at least 0.3, more specifically at least 0.4, 0.5, 0.6, 0.8, 1.0, 2, 4, 6, 8, 10, 15 or 20 higher than the ratio found in the milk that is used for the preparation of the dairy product.

The invention relates specifically to dairy products having a weight ratio of α-lactalbumin to β-lactoglobulin of more than 1:3, 1:3.1, 1:3.2, 1:3.3, 1:3.4, 1:3.5, 1:3.6, 1: 3.7, 1:3.8, 1:3.9 more than 1:4, 1:4.1, 1:4.2, 1:4.3, 1:4.4, 1:4.5, 1:4.6, 1:4.7, 1:4.8, 1:4.9, preferably more than 1:5, 1:5.25, 1:5.5, 1:5.75, more preferably more than 1:6, 1:6.5, 1:7, 1:7.5, 1:8, 1:8.5 or 1:9, 1:9.5, even more preferably more than 1:10, more than 1:15, more than 1:20, and most preferably more than 1:25. Such dairy products are obtained by adding a texture enhancer. The texture enhancer of the invention is added to the starting material for the dairy product, i.e. the milk or milk-derived product, prior to heating/homogenizing to distribute the protein over the fat globules to achieve a large surface area. The subsequent high temperature pasteurisation is performed for denaturation of the whey proteins and reaction thereof with caseine.

The dairy product is for example a fermented milk product, such as yoghurt, quark, fromage frais, drinking yoghurt, yoghurt mousse, probiotic yoghurt, mild yoghurt etc. or a non-fermented milk product, such as a custard-like dairy dessert.

The use of the enhancer in dairy products and dairy products comprising the enhancer can be identified by means of measuring the concentrations of α-lactalbumin and β-lactoglobulin using capillary electrophoresis as described by M.A. Manso, T.M. Catteano, S. Barzaghi, C. Olieman, R. Lopez-Fandino, Journal of AOAC International 85 (5): 1090-1095, sept-oct 2002, slightly adapted in that additionally DTT (dithiothreitol) was used in the separation/run buffer to fully solubilize covalent aggregates, and calculating the weight ratio between the two as present in the dairy product.

The retentate of step d) of the method of the invention is enriched in α-lactalbumin and is also part of this invention, which thus relates to a whey protein concentrate (WPC) or isolate (WPI) enriched in α-lactalbumin as compared to the starting whey and obtainable as the retentate of step d) of the method of the invention. α-Lactalbumin enriched WPC or WPI may be used in e.g. infant formulae or as a source of tryptophan, an essential limiting amino acid in food and feed.

The present invention will be further illustrated in the Example that follows and that is not intended to limit the invention.

In the Example reference is made to the following figures:
**Figure 1**: Viscosity testing of stirred yoghurt by means of a Posthumus funnel after 4 days storage;
**Figure 2**: Viscosity testing of set yoghurt by means of a Stevens Texture Analyzer (STA) after 4 days storage;
**Figure 3**: Viscosity testing of top and bottom fractions of stirred yoghurt by means of a Stevens Texture Analyzer (STA) after 20 days storage.

### EXAMPLE

### Material and methods

### 1. Preparation of yoghurt

The yoghurt was prepared as follows. Starting milk (1.5 % fat, 3.5 % protein) was obtained from the local supermarket. The level of α-lactalbumin is 0.115 % w/w, the level of β-lactoglobulin is 0.315 % w/w. The protein level of the milk (3.5 % (w/w)) was increased to 4.2 % (w/w) by addition of whey protein concentrate. After stirring for 1 hour at room temperature, the milk was heated to 60°C and homogenised in a double stage homogeniser (1^{st} stage: 200 bar; 2^{nd} stage: 20 bar) at 60°C. Homogenisation was followed by pasteurisation at 90°C for 5 minutes, the milk was cooled to 42°C and collected in a sterile fermentation vat. Hereafter, yoghurt culture YC 380, comprising *Streptococcus thermophilus* and *Lactobacillus delbrueckii* subsp. *bulgaricus* (Chr. Hansen, Denmark) was added at a level of 0.2 U/l to obtain yoghurt milk.

For set yoghurt, sterile 150 ml containers were filled with the yoghurt milk and incubated at 42°C till the yoghurt reached a pH of 4.5 (5½-6 hours). Then the yoghurt containers were cooled to 4°C.

For stirred yoghurt, the yoghurt milk was incubated in the vat at 42°C. As the yoghurt reached a pH of 4.5 (5½-6 hours), the yoghurt was structurized by pumping the mass through an Ystral Z66, (Ystral, Netherlands) shear mixer (set at position 3), after which the structurized yoghurt was cooled to 17°C, filled in 250 ml containers and placed at 4°C.

### 2. Viscosity testing

After storage at 4°C during 4 days, the viscosity of the stirred yoghurt was determined at 7°C using a Posthumus funnel with an orifice of 8 mm (FNZ, the Netherlands). The time for the yoghurt to leave the funnel was recorded (in seconds). This procedure was repeated twice with the same yoghurt sample ("1^{st} pass" and "2^{nd} pass").

After storage at 4°C during 4 days, the viscosity of the set yoghurt was determined at 7°C using the Stevens Texture Analyser by penetrating a standard "set yoghurt cylinder" (length 35 mm, diameter 12 mm) in the yoghurt container at a speed of 1 mm/sec. The force is recorded after a penetration of 25 mm (STA).

After storage at 4°C during 18 days, the viscosity of the stirred yoghurt was determined in the top (top STA) and the bottom layer (bottom STA) of the yoghurt at 7°C using the Stevens Texture Analyser by penetrating a standard "stirred yoghurt cylinder" (length 20 mm, diameter 37 mm) in the yoghurt container at a speed of 2 mm/sec. The force is recorded after a penetration of 18 mm.

### 3. Preparation of texture enhancer

To test the texture enhancer of the invention, the whey protein concentrate in the standard yoghurt preparation is replaced by different texture enhancers. To achieve various weight ratio's of α-lactalbumin:β-lactoglobulin in a number of whey protein concentrates (WPC), blends of α-lactalbumin enriched whey protein concentrate, β-lactoglobulin enriched whey protein concentrate, and regular whey protein concentrate were prepared.

α-lactalbumin enriched WPC was obtained from Davisco, USA and contained 88 % (w/w) total protein. The level of α-lactalbumin/protein was 87.1 % (w/w). The level of β-lactoglobulin/protein was 5.9 % (w/w). The content of alpha-lactalbumin and beta-lactoglobulin in the WPC's mentioned hereabove was determined by High Pressure Gel Permeation Chromatography on a SHODEX KW 803 column (Showa, Japan), using isocratic elution with 40% acetonitrile/1% trifluoro-acetic acid.

β-lactoglobulin enriched WPC (88 % (w/w) total protein) was prepared as follows. Whey obtained from skimmed milk after precipitation of casein with sulphuric acid is heated to 50°C at pH 4.6. Next, the whey was ultrafiltered over a HKF 131 (Koch, USA) UF membrane (approx. 10 kD cut-off) in a 3 hour period at 50°C and concentrated to 1/7 of the initial volume. The retentate was microfiltered at 50°C over a 0.3 micron PVDF membrane (Osmonics JX840F) to 1/8 of the initial volume. The MF permeate was ultrafiltered and diafiltered at 50°C over a HFK 131 membrane. The retentate thus obtained is the β-lactoglobulin enriched whey protein isolate for use in the invention. It contained 4.4 % w/w α-lactalbumin/protein and 81 % w/w β-lactoglobulin/ protein.

The protein in the MF retentate was found to be enriched in α-lactalbumin. A level of at least 50 % (w/w) α-lactalbumin/ protein could be obtained.

Regular WPC 35 (35 % protein w/w) was obtained from Eurial, France. It contained 37.7 % w/w β-lactoglobulin/protein and 14.0 % α-lactalbumin/protein.

The concentrations β-lactoglobulin and α-lactalbumin in the yoghurts are measured using capillary electrophoresis as described by M.A. Manso, T.M. Catteano, S. Barzaghi, C. Olieman, R. Lopez-Fandino, Journal of AOAC International 85 (5): 1090-1095, sept-oct 2002. The method was slightly adapted in that additionally DTT (dithiothreitol) was used in the separation/run buffer to fully solubilize covalent aggregates.

The composition of the WPC blends added to the yoghurt milk is shown in table 1.

Table 2 shows the calculated concentrations β-lactoglobulin and α-lactalbumin in the yoghurts.

The calculated concentrations β-lactoglobulin and α-lactalbumin in the different whey protein concentrates added to increase the protein level of the milk are shown table 3.

**Table 1**

| Composition (w/w) of the different whey protein concentrates added to the yoghurt milk. The whey proteins α-lactalbumin enriched WPC and β-lactoglobulin enriched WPC are WPC's with 88% protein. | | | |
|---|---|---|---|
| Experiment/ Blend no. | β-lactoglobulin enriched WPC | α-lactalbumin enriched WPC | WPC 35 |
| | | | (%) |
| | (%) | (%) | |
| 1 | | 100 | |
| 2 | | | 100 |
| 3 | 10.6 | | 89.4 |
| 4 | 25.8 | | 74.2 |
| 5 | 100 | | |

The addition of the various blends to the yoghurt milk leads to the following level of α-lactalbumin and β-lactoglobulin in the yoghurt samples, and therefore also in the final yoghurt products.

**Table 2A**

| Calculated concentrations (w/w) β-lactoglobulin and α-lactalbumin in the different yoghurts. | | | | | | | |
|---|---|---|---|---|---|---|---|
| Experiment/ blend | β-lactoglobulin (%) | | | α-lactalbumin (%) | | | α-lac: β-lg |
| | from wpc addition | from starting milk | total | from wpc addition | from starting milk | total | |
| 1 | 0.049 | 0.315 | 0.37 | 0.72 | 0.115 | 0.84 | 1:0.44 |
| 2 | 0.29 | 0.315 | 0.61 | 0.11 | 0.115 | 0.23 | 1:2.65 |
| 3 | 0.36 | 0.315 | 0.67 | 0.096 | 0.115 | 0.21 | 1:3.19 |
| 4 | 0.43 | 0.315 | 0.74 | 0.082 | 0.115 | 0.20 | 1:3.70 |
| 5 | 0.54 | 0.315 | 0.85 | 0.027 | 0.115 | 0.14 | 1:6.07 |

**Table 2B**

| Concentration of α-lactalbumin and β-lactoglobulin in the yoghurts determined with the SDS-CE method and the ratio calculated from these values | | | |
|---|---|---|---|
| Experiment/ blend | α-lactalbumin (g/l) | β-lactoglobulin (g/l) | ratio α:β |
| 1 | 5.6 | 4.7 | 1:0.8 |
| 2 | 2.1 | 7.0 | 1:3.3 |
| 3 | 1.9 | 8.2 | 1:4.3 |
| 4 | 1.8 | 9.9 | 1:5.5 |
| 5 | 1.3 | 10.2 | 1:7.8 |
| 6 (milk) | 1.1 | 3.5 | 1:3.2 |

**Table 3**

| Calculated concentrations β-lactoglobulin and α-lactalbumin in the different whey protein concentrates added to the yoghurt milk. | | | |
|---|---|---|---|
| Experiment | β-lactoglobulin | α-lactalbumin | α-lac:β-lg |
| | (%) | (%) | (w/w) |
| 1 | 0.049 | 0.72 | 1:0.068 |
| 2 | 0.29 | 0.11 | 1:2.64 |
| 3 | 0.36 | 0.096 | 1:3.75 |
| 4 | 0.43 | 0.082 | 1:5.24 |
| 5 | 0.54 | 0.027 | 1:20.00 |

### Results

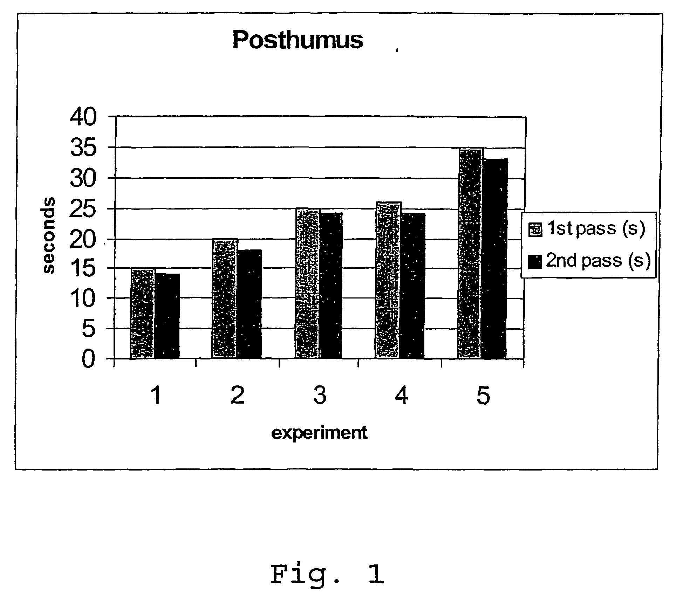

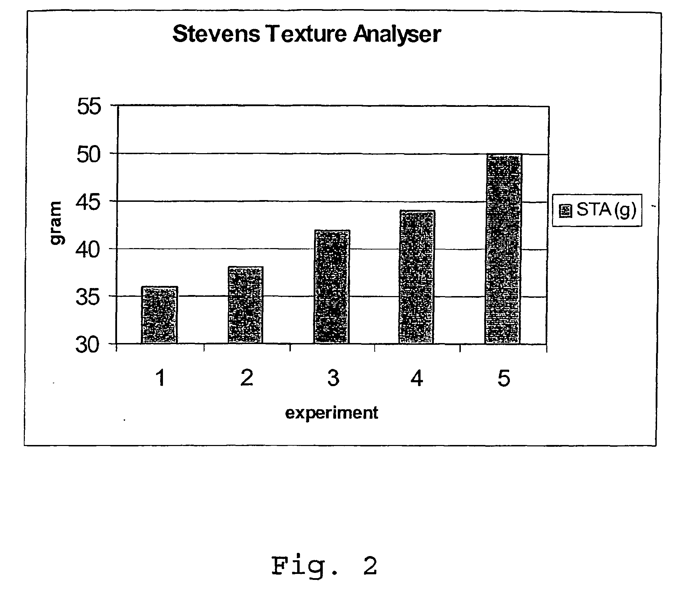

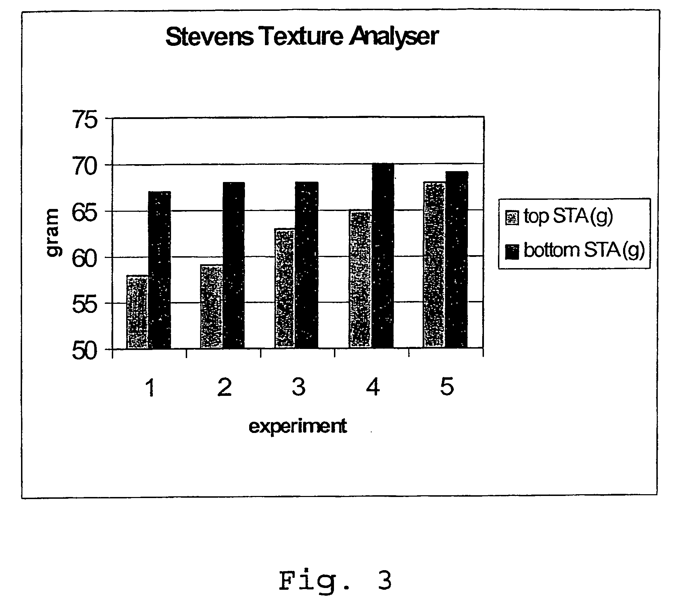

Five different yoghurts, with an increased level of β-lactoglobulin/α-lactalbumin (see table 2), were made and the viscosity was measured with the Posthumus method and the Stevens Texture Analyser as described in the Material and methods section. The viscosity measurements of the stirred yoghurts are shown in figures 1 and 3. The consistency/texture measurements of the set yoghurts are shown in figure 2.

From figures 1 and 2 it follows that the viscosity increases upon increasing β-lactoglobulin concentrations. From figure 3 it follows that the top fraction is more firm upon increasing β-lactoglobulin concentrations.

There is a slight difference between the calculated and measured ratios. The correlation coefficient is however 0.99.

## Claims

1. Method for preparing a whey protein concentrate enriched in β-lactoglobulin, comprising:
a) providing an acid whey;
b) heating the whey at an acidic pH to a particular temperature;
c) ultrafiltering the heated whey over a membrane with a cut-off ≤ 10 kDalton to obtain a concentrated retentate;
d) microfiltering the retentate over a microfiltration membrane to obtain a permeate;
e) optionally ultrafiltering and/or diafiltering the permeate over a membrane with a cut-off of ≤ 10 kDalton;
f) retaining the retentate to obtain a β-lactoglobulin enriched whey protein concentrate or isolate.

2. Method as claimed in claim 1, wherein step c) and d) are performed at substantially the same temperature as the temperature of the heat treatment.

3. Method as claimed in claim 1 or 2, wherein the acid whey is an acid whey obtained from casein production or acidified cheese whey.

4. Method as claimed in any one of the claims 1-3, wherein the acidic pH is a pH between 3.5 and 5.5, suitably between about 4.0 and 5.0, more suitably between about 4.4 and 4.7, most suitably about 4.6.

5. Method as claimed in any one of the claims 1-4, wherein the microfiltration membrane has a pore size of between 0.1 and 1.4 micron, preferably between 0.2 and 0.8 micron, more preferably about 0.3 micron.

6. Method as claimed in claim 5, wherein the microfiltration membranes is selected from the group consisting of polysulfon membranes, polyethersulfon membranes, aluminiumoxide (AlOX) membranes, Zirconimoxide (ZrOX) membranes, polyvinylidene (PVDF) membranes, regenerated cellulose membranes.

7. Method as claimed in claim 6, wherein the microfiltration membrane is a 0.3 micron polyvinylidene membrane, in particular an Osmonics^{™} JX840F membrane.

8. Method as claimed in any one of the claims 1-7, wherein the heat treatment is performed during 15 minutes to 6 hours, preferably from 30 minutes to 3 hours, more preferably from 30 minutes to 1 hour and most preferably during 45 minutes at a temperature between 45 and 65°C, preferably between 50 and 60°C, more preferably at 55°C.

9. Texture enhancer based on a whey protein concentrate enriched in β-lactoglobulin and obtained by the method as claimed in any one of the claims 1-8 for use in a fermented milk product.

10. Texture enhancer as claimed in claim 9, comprising an amount of β-lactoglobulin that leads to a weight ratio of α-lactalbumin to β-lactoglobulin in the product comprising the enhancer of more than 1:3, 1:3.1, 1:3.2, 1:3.3, 1:3.4, 1:3.5, 1:3.6, 1: 3.7, 1:3.8, 1:3.9 more than 1:4, 1:4.1, 1:4.2, 1:4.3, 1:4.4, 1:4.5, 1:4.6, 1:4.7, 1:4.8, 1:4.9, preferably more than 1:5, 1:5.25, 1:5.5, 1:5.75, more preferably more than 1:6, 1:6.5, 1:7, 1:7.5, 1:8, 1:8.5 or 1:9, 1:9.5, even more preferably more than 1:10, more than 1:15, more than 1:20, and most preferably more than 1:25.

11. Texture enhancer as claimed in claim 9 or 10, wherein the β-lactoglobulin is native β-lactoglobulin.

12. Texture enhancer as claimed in claim 9, 10 or 11, wherein the enhancer comprises extra β-lactoglobulin.

13. Fermented milk product comprising a texture enhancer as claimed in any one of the claims 9-12.

14. Fermented milk product as claimed in claim 13 having a weight ratio of α-lactalbumin to β-lactoglobulin of more than 1:3, 1:3.1, 1:3.2, 1:3.3, 1:3.4, 1:3.5, 1:3.6, 1: 3.7, 1:3.8, 1:3.9 more than 1:4, 1:4.1, 1:4.2, 1:4.3, 1:4.4, 1:4.5, 1:4.6, 1:4.7, 1:4.8, 1:4.9, preferably more than 1:5, 1:5.25, 1:5.5, 1:5.75, more preferably more than 1:6, 1:6.5, 1:7, 1:7.5, 1:8, 1:8.5 or 1:9, 1:9.5, even more preferably more than 1:10, more than 1:15, more than 1:20, and most preferably more than 1:25.

15. Fermented milk product as claimed in claim 13 or 14, wherein the fermented milk product is yoghurt, quark, fromage frais, drinking yoghurt, yoghurt mousse, probiotic yoghurt or mild yoghurt.

16. Whey protein concentrate or isolate enriched in α-laetalbumin, obtained as the retentate of step d) of the method as claimed in claim 1.

17. Whey protein concentrate as claimed in claim 16 for use in infant formula or as a source of tryptophan.

## Patentansprüche

1. Verfahren zum Herstellen eines Molkenproteinkonzentrats, das an β-Lactoglobulin angereichert ist, umfassend:
a) das Bereitstellen einer sauren Molke;
b) das Erhitzen der Molke bei einem sauren pH-Wert auf eine bestimmte Temperatur;
c) das Ultrafiltrieren der erhitzten Molke über einer Membran mit einem Abbruch ≤ 10 k Dalton unter Erzielung eines konzentrierten Retentats;
d) das Mikrofiltrieren des Retentats über einer Mikrofiltriermembran, um ein Permeat zu erhalten;
e) das wahlweise Ultrafiltrieren und/oder Diafiltrieren des Permeats über einer Membran mit einem Abbruch bei ≤ 10 k Dalton;
f) das Zurückhalten des Retentats, um ein mit β-Lactoglobulin angereichertes Molkenproteinkonzentrat oder-isolat zu erhalten.

2. Verfahren nach Anspruch 1, wobei der Schritt c) und d) bei im Wesentlichen der gleichen Temperatur durchgeführt werden, wie die Temperatur der Hitzebehandlung.

3. Verfahren nach Anspruch 1 oder 2, wobei die saure Molke eine saure Molke ist, die aus der Caseinherstellung oder aus angesäuerter Käsemolke erhalten wird.

4. Verfahren nach einem der Ansprüche 1 - 3, wobei der saure pH-Wert ein pH-Wert ist, der zwischen 3,5 und 5,5, geeigneterweise zwischen etwa 4,0 und 5,0, noch geeigneter zwischen etwa 4,4 und 4,7 und am geeignetsten bei etwa 4,6 liegt.

5. Verfahren nach einem der Ansprüche 1 - 4, wobei die Mikrofiltriermembran eine Porengröße zwischen 0,1 und 1,4 Mikron, bevorzugt zwischen 0,2 und 0,8, noch bevorzugter etwa von 0,3 Mikron besitzt.

6. Verfahren nach Anspruch 5, wobei die Mikrofiltrationsmembranen aus derGruppe bestehend aus Polysulfonmembranen, Polyethersulfonmembranen, Aluminiumoxid- (AlOX-) Membranen, Zirconiumoxid-(ZrOX-) Membranen, Polyvinyliden- (PVDF-) Membranen, und Membranen aus regenerierter Cellulose ausgewählt werden.

7. Verfahren nach Anspruch 6, wobei die Mikrofiltrationsmembran eine Polyvinylidenmembran von 0,3 Mikron, insbesondere eine Osmonics^{WZ} JX840F-Membran ist.

8. Verfahren nach einem der Ansprüche 1 - 7, wobei die Wärmebehandlung wird im Laufe von 15 Minuten bis 6 Stunden, bevorzugt 30 Minuten bis 3 Stunden, noch bevorzugter 30 Minuten bis 1 Stunde und am bevorzugtesten im Laufe von etwa 45 Minuten bei einer Temperatur zwischen 45 und 65°C, bevorzugt zwischen 50 und 60°C, noch bevorzugter bei etwa 55°C durchgeführt.

9. Texturverbesserungsmittel auf der Basis eines mit ?-Lactoglobuline angereicherten Molkeproteinkonzentrats, das durch das Verfahren nach einem der Ansprüche 1 - 8 erhalten wird, zur Verwendung in einem fermentierten Milchprodukt.

10. Texturverbesserungsmittel nach Anspruch 9, umfassend eine Menge an β-Lactoglobulin, die zu einem Gewichtsverhältnis von α-Lactalbumin zu β-Lactoglobulin im Produkt, das das Verbesserungsmittel enthält, von mehr als 1:3, 1:3,1, 1:3,2, 1:3,3, 1:3,4, 1:3,5, 1:3,6, 1:3,7, 1:3,8, 1:3,9, mehr als 1:4, 1:4,1, 1:4,2, 1:4,3, 1:4,4, 1:4,5, 1:4,6, 1:4,7, 1:4,8, 1:4,9, bevorzugt mehr als 1:5, 1:5,25, 1:5,5, 1:5,75, noch bevorzugter mehr als 1:6, 1:6,5, 1:7, 1:7,5, 1:8, 1:8,5 oder 1:9, noch bevorzugter mehr als 1:10, mehr als 1:15, mehr als 1:20 und am bevorzugtesten 1:25 führt.

11. Texturverbesserungsmittel nach Anspruch 9 oder 10, wobei das β-Lactoglobulin natives β-Lactoglobulin ist.

12. Texturverbesserungsmittel nach Anspruch 9, 10 oder 11, wobei das Verbesserungsmittel extra β-Lactoglobulin umfasst.

13. Fermentiertes Milchprodukt umfassend ein Texturverbesserungsmittel nach einem der Ansprüche 9 - 12.

14. Fermentiertes Milchprodukt nach Anspruch 13, das ein Gewichtsverhältnis von α-Lactalbumin zu β-Lactoglobulin von mehr als 1:3, 1:3,1, 1:3,2, 1:3,3, 1:3,4, 1:3,5, 1:3,6, 1:3,7, 1:3,8, 1:3,9, mehr als 1:4, 1:4,1, 1:4,2, 1:4,3, 1:4,4, 1:4,5, 1:4,6, 1:4,7, 1:4,8, 1:4,9, bevorzugt mehr als 1:5, 1:5,25, 1:5,5, 1:5,75, noch bevorzugter mehr als 1:6, 1:6,5, 1:7, 1:7,5, 1:8, 1:8,5 oder 1:9, noch bevorzugter mehr als 1:10, mehr als 1:15, mehr als 1:20 und am bevorzugtesten 1:25 aufweist.

15. Fermentiertes Milchprodukt nach Anspruch 13 oder 14, wobei das fermentierte Milchprodukt Joghurt, Quark, Frischkäse, Trinkjoghurt, Joghurtmousse, probiotischer Joghurt oder milder Joghurt ist.

16. An α-Lactalbumin angereichertes Molkenproteinkonzentrat oder -isolat, als Retentat aus Schritt d) des Verfahrens nach Anspruch 1 erhalten.

17. Molkenproteinkonzentrat nach Anspruch 16 zur Verwendung zur Säuglingsernährung oder als Quelle von Tryptophan.

## Revendications

1. Procédé de préparation d'un concentré de protéine de lactosérum enrichi en β-lactoglobuline, comprenant les étapes consistant à :
a) proposer un lactosérum acide ;
b) chauffer le lactosérum à un pH acide à une température particulière ;
c) ultrafiltrer le lactosérum chauffé sur une membrane qui est une coupe ≤ 10 kDaltons pour obtenir un rétentat concentré ;
d) microfiltrer le rétentat sur une membrane de microfiltration pour obtenir un perméat ;
e) éventuellement ultrafiltrer et/ou diafiltrer le perméat sur une membrane de coupe ≤ 10 kDaltons ;
f) conserver le rétentat pour obtenir un concentré ou un isolat de protéine de lactosérum enrichi en β-lactoglobuline.

2. Procédé selon la revendication 1, dans lequel l'étape c) et l'étape d) sont réalisées à sensiblement la même température que la température du traitement thermique.

3. Procédé selon la revendication 1 ou 2, dans lequel le lactosérum acide est un lactosérum acide obtenu à partir de la production de caséine ou de lactosérum de fromage acidifié.

4. Procédé selon l'une quelconque des revendications 1 à 3, dans lequel le pH acide est un pH compris entre 3,5 et 5,5, de manière appropriée entre environ 4,0 et 5,0, de manière particulièrement appropriée entre 4,4 et 4,7, et de manière préférée entre toutes d'environ 4,6.

5. Procédé selon l'une quelconque des revendications 1 à 4, dans lequel la membrane de microfiltration a une taille de pore entre 0,1 et 0,4 micron, de préférence entre 0,2 et 0,8 micron, plus préférablement d'environ 0,3 micron.

6. Procédé selon la revendication 5, dans lequel les membranes de microfiltration sont choisies dans le groupe consistant en des membranes de polysulfone, des membranes de polyéthersulfone, des membranes d'oxyde d'aluminium (AlOX), des membranes d'oxyde de zirconium (ZrOX), des membranes de polyvinylidène (PVDF), et des membranes de cellulose régénérée.

7. Procédé selon la revendication 6, dans lequel la membrane de microfiltration est une membrane de polyvinylidène de 0,3 micron, en particulier un membrane Osmonic^{™} JX840F.

8. Procédé selon l'une quelconque des revendications 1 à 7, dans lequel le traitement thermique est réalisé pendant 15 minutes à 6 heures, de préférence pendant 30 minutes à 3 heures, plus préférablement pendant 30 minutes à 1 heures et de manière préférée entre toutes pendant environ 45 minutes à une température entre 45 et 65 °C, de préférence entre 50 et 60 °C, plus préférablement à environ 55 °C.

9. Renforçateur de texture à base de concentré de protéine de lactosérum enrichi en β-lactoglobuline et obtenu par le procédé selon l'une quelconque des revendications 1 à 8 pour une utilisation dans un produit laitier fermenté.

10. Renforçateur de texture selon la revendication 9, comprenant une quantité de β-lactoglobuline qui donne un rapport en poids de la α-lactalbumine à la β-lactoglobuline dans le produit comprenant le renforçateur de plus de 1:3, 1:3,1, 1:3,2, 1:3,3, 1:3,4, 1:3,5, 1:3,6, 1:3,7, 1:3,8, 1:3,9, de plus de 1:4, 1:4,1, 1:4,2, 1:4,3, 1:4,4, 1:4,5, 1:4,6, 1:4,7, 1:4,8, 1:4,9, de préférence de plus de 1:5, 1:5,25, 1:5,5, 1:5,75, plus préférablement de plus de 1:6, 1:6,5, 1:7, 1:7,5, 1:8, 1:8,5 ou 1:9, 1:9,5, encore plus préférablement de plus de 1:10, de plus de 1:15, de plus de 1:20, et de manière préférée entre toutes de plus de 1:25.

11. Renforçateur de texture selon la revendication 9 ou 10, dans lequel la β-lactoglobuline est la β-lactoglobuline naturelle.

12. Renforçateur de texture selon la revendication 9, 10 ou 11, dans lequel le renforçateur comprend plus de β-lactoglobuline.

13. Produit laitier fermenté comprenant un renforçateur de texture selon l'une quelconque des revendications 9 à 12.

14. Produit laitier fermenté selon la revendication 13, ayant un rapport en poids de la α-lactalbumine à la β-lactoglobuline de plus de 1:3, 1:3,1, 1:3,2, 1:3,3, 1:3,4, 1:3,5, 1:3,6, 1:3,7, 1:3,8, 1:3,9, de plus de 1:4, 1:4,1, 1:4,2, 1:4,3, 1:4,4, 1:4,5, 1:4,6, 1:4,7, 1:4,8, 1:4,9, de préférence de plus de 1:5, 1:5,25, 1:5,5, 1:5,75, plus préférablement de plus de 1:6, 1:6,5, 1:7, 1:7,5, 1:8, 1:8,5 ou 1:9, 1:9,5, encore plus préférablement de plus de 1:10, de plus de 1:15, de plus de 1:20, et de manière préférée entre toutes de plus de 1:25.

15. Produit laitier fermenté selon la revendication 13 ou 14, dans lequel le produit laitier fermenté est un yaourt, un fromage blanc, un fromage frais, un yaourt à boire, une mousse de yaourt, un yaourt probiotique ou un yaourt doux.

16. Concentré ou isolat de protéine de lactosérum enrichi en α-lactalbumine, obtenu sous la forme de rétentat de l'étape d) du procédé décrit selon la revendication 1.

17. Concentré de protéine de lactosérum selon la revendication 16, pour une utilisation dans un lait pour nourrisson ou comme source de trypto
